# EUROPÄISCHE PATENTSCHRIFT

(11) **EP 2 844 416 B1**
(45) Veröffentlichungstag und Bekanntmachung des Hinweises auf die Patenterteilung: **17.03.2021**
(21) Anmeldenummer: 13709924.8
(22) Anmeldetag: 18.03.2013
(51) Int. Cl.: B23K 26/06, B23K 26/073, B23K 26/38

(54) **VERFAHREN UND VORRICHTUNG ZUR BEARBEITUNG EINES WERKSTÜCKS MIT LASERSTRAHLUNG**
METHOD AND DEVICE FOR LASER MACHINING
PROCÉDÉ ET DISPOSITIF DE TRAVAIL D'UNE PIÈCE PAR RAYONNEMENT LASER

(30) Priorität: 30.04.2012 DE 102012207220
(43) Veröffentlichungstag der Anmeldung: 11.03.2015
(73) Patentinhaber: Robert Bosch GmbH, 70442 Stuttgart (DE)
(72) Erfinder: GRAF, Ulrich, 74321 Bietigheim-Bissingen (DE); GAUCH, Roland, 71701 Schwieberdingen (DE)
(86) Internationale Anmeldenummer: PCT/EP2013/055574
(87) Internationale Veröffentlichungsnummer: WO 2013/164125

(56) Entgegenhaltungen:
- WO-A1-99/45441
- WO-A1-2009/115785
- US-A1- 2002 008 091

## Beschreibung

Die Erfindung geht aus von bekannten Verfahren und Vorrichtungen zur Bearbeitung eines Werkstücks mit Laserstrahlung. Derartige Vorrichtungen und Verfahren können insbesondere eingesetzt werden, um dreidimensionale Mikrogeometrien in Werkstoffen abzutragen. Ohne Beschränkungen weiterer möglicher Anwendungsbeispiele kann diesbezüglich beispielsweise Bezug genommen werden auf Laserablationstechniken bei der Herstellung metallischer Oberflächenstrukturen, beispielsweise zur Verbesserung von Reibungseigenschaften, bei der Herstellung von Düsen oder bei der Herstellung keramischer Sensorelemente, beispielsweise Lambdasonden oder anderen Arten keramischer Gassensoren. Zahlreiche andere Anwendungen für derartige Laserablationstechniken sind denkbar Die Gattung zeigt die US 2002/008091.

Für einen Materialabtrag werden insbesondere Laser mit ultrakurzen Laserpulsen (UKP) eingesetzt. Als Ultrakurzpulslaser werden insbesondere Laser bezeichnet, welche gepulstes Laserlicht mit Pulsweiten im Bereich von Pikosekunden und Femtosekunden oder kürzer aussenden, beispielsweise mit Pulsdauern von maximal 100 Pikosekunden, vorzugsweise von maximal 10 Pikosekunden. Derartige Ultrakurzpulslaser ermöglichen insbesondere einen quasi schmelzfreien und grasfreien Abtrag des Materials, solange die Pulsenergie nicht zu hoch ist. Die abzutragenden Geometrien werden hierbei im Stand der Technik üblicherweise durch ein frei programmierbares Scanner-System vorgegeben. Dabei wird die Geometrie mit einem Laserstrahl mit kleinem Strahldurchmesser auf dem Werkstück abgerastert und damit stückweise und schichtweise abgetragen.

Der Abtrag von komplexen und insbesondere dreidimensionalen Geometrien erfordert jedoch in der Praxis in vielen Fällen unrentabel lange Prozesszeiten. Eine Verkürzung der Prozesszeiten ist in der Regel nur durch eine Erhöhung der Abtragsraten möglich. Diese Erhöhung der Abtragsraten erfordert zumeist eine Steigerung der mittleren Laserleistung Pₐᵥ=E_{p·}fₚ. Dabei bezeichnet Pₐᵥ die mittlere Laserleistung, Eₚ die Pulsenergie eines einzelnen Pulses, und fₚ die Pulsfrequenz. Wird diese Leistungssteigerung bei gleichem optischem Abbildungssystem alleine über eine Steigerung der Pulsenergie Eₚ realisiert, so geht jedoch in der Regel der Vorteil des quasi schmelzfreien und quasi gratfreien Abtrags verloren.

Um die Bearbeitungspräzision bei erhöhter Abtragsrate zu erhalten, ist es daher in der Praxis in der Regel erforderlich, bei konstanter Pulsenergie die Repetitionsrate oder Pulsfrequenz fₚ zu steigern. Gleichzeitig muss für den Erhalt des quasi schmelzfreien Abtrags jedoch der Pulsüberlapp der einzelnen Pulse auf dem Werkstück zumindest im Wesentlichen konstant gehalten werden. Folglich muss in der Praxis zumeist die Vorschubgeschwindigkeit des Laserstrahls auf dem Werkstück proportional zur Repetitionsrate gesteigert werden.

Übliche Scanner sind jedoch, zumeist abhängig von einer Fokussieroptik und insbesondere deren Brennweite, in der Regel durch die Dynamik der Scannerspiegel in ihrer Bahngeschwindigkeit begrenzt. Um schnelle Strahlquellen mit hoher Repetitionsrate zur Erhöhung des Volumenabtrags einsetzen zu können, sind somit viele am Markt verfügbare Strahlablenkungssysteme, beispielsweise sogenannte Galvo- oder Galvano-Scanner, zu langsam. Wünschenswert wären daher Verfahren und Vorrichtungen zur Bearbeitung eines Werkstücks mit Laserstrahlung, welche einerseits eine hohe Abtragsrate aufweisen und andererseits eine hohe Bearbeitungspräzision ermöglichen.

### Offenbarung der Erfindung

Es werden dementsprechend ein Verfahren zur Bearbeitung eines Werkstücks mit Laserstrahlung gemäß Anspruch 1 sowie eine Laserbearbeitungsvorrichtung zur Bearbeitung eines Werkstücks mit Laserstrahlung gemäss Anspruch 9 vorgeschlagen. Die Laserbearbeitungsvorrichtung kann insbesondere eingerichtet sein, um ein erfindungsgemäßes Verfahren durchzuführen, und das Verfahren kann insbesondere unter Verwendung der vorgeschlagenen Laserbearbeitungsvorrichtung durchgeführt werden. Unter einer Bearbeitung mit Laserstrahlung kann insbesondere eine Laserablation verstanden werden, also ein Verfahren, bei welchem ein Materialabtrag von Material des Werkstücks erfolgt, beispielsweise indem Material des Werkstücks verdampft wird. Die Laserbearbeitungsvorrichtung kann dementsprechend insbesondere als Laserablationsvorrichtung ausgestaltet sein.

Bei dem vorgeschlagenen Verfahren wird mindestens ein Laserstrahl bereitgestellt. Entsprechend weist die Laserbearbeitungsvorrichtung mindestens eine Laserquelle zum Bereitstellen mindestens eines Laserstrahls auf. Der Laserstrahl wird bei dem vorgeschlagenen Verfahren mittels mindestens einer veränderbaren Strahlformungseinrichtung beeinflusst und trifft anschließend auf mindestens eine Bearbeitungsfläche des Werkstücks auf. Mittels der Strahlformungseinrichtung wird dem Laserstrahl am Ort der Bearbeitungsfläche mindestens ein vorgegebenes einstellbares Strahlprofil aufgeprägt.

Unter einer Strahlformungseinrichtung ist im Rahmen der vorliegenden Erfindung eine grundsätzlich beliebige Vorrichtung zu verstehen, welche eingerichtet ist, um ein Strahlprofil des Laserstrahls am Ort der Bearbeitungsfläche einzustellen. Erfindungsgemäß kann bei dieser Einstellung zwischen mindestens zwei, vorzugsweise mindestens drei, vier, fünf oder mehr Strahlprofilen ausgewählt werden und/oder das Strahlprofil kann frei einstellbar sein. Die Einstellung kann in mehreren Stufen oder auch stufenlos erfolgen. Unter einem Strahlprofil kann dabei insbesondere eine lokale Intensitätsverteilung auf dem Ort der Bearbeitungsfläche verstanden werden.

Unter einer Bearbeitungsfläche kann allgemein eine für die Laserbestrahlung zugängliche Oberfläche des Werkstücks verstanden werden. Während des Verfahrens kann sich diese Bearbeitungsfläche ändern, da beispielsweise ein Materialabtrag erfolgen kann und sich die Bearbeitungsfläche somit zwischen mehreren Verfahrensschritten ins Innere des Werkstücks hinein verlagern kann. Die Bearbeitungsfläche kann einstückig sein, kann sich jedoch auch aus mehreren Teilflächen zusammensetzen.

Die Strahlformungseinrichtung ist ingerichtet , um auf der Bearbeitungsfläche mindestens zwei verschiedene Muster beleuchteter und unbeleuchteter Bereiche zu erzeugen. Unter einem Muster ist dabei eine einstellbare Abfolge unterschiedlich beleuchteter Bereiche, beispielsweise eine einstellbare Abfolge beleuchteter und unbeleuchteter Bereiche, in mindestens zwei Dimensionen zu verstehen. Beispielsweise können sich in jeder Raumrichtung mindestens zwei unterschiedlich beleuchteter Abschnitte, beispielsweise mindestens zwei beleuchtete und unbeleuchtete Abschnitte, in dem Muster abwechseln. Beispielsweise kann das Muster beleuchteter und unbeleuchteter Bereiche ein rundes, ovales, rechteckförmiges und insbesondere quadratisches Muster umfassen, sodass beispielsweise der beleuchtete Bereich einen runden, insbesondere kreisförmigen oder ovalen, und/oder rechteckigen, insbesondere quadratischen Bereich bildet, innerhalb dessen beispielsweise ein Materialabtrag erfolgen kann.

Das Verfahren wird erfindungsgemäß derart durchgeführt , dass nacheinander mindestens zwei verschiedene derartiger Muster beleuchteter und unbeleuchteter Bereiche erzeugt werden. Bei einem Wechsel zwischen zwei verschiedenen Mustern bleibt eine Fluenz in den beleuchteten Bereichen der verschiedenen Muster identisch Unter einer Fluenz H ist dabei allgemein eine Flächendichte der Laserenergie zu verstehen.

Weitere mögliche Ausgestaltungen betreffen die Strahlformungseinrichtung. Wie oben ausgeführt, kann es sich bei dieser Vorrichtung grundsätzlich um eine beliebige Vorrichtung handeln, welche die Einstellung eines Strahlprofils am Ort der Bearbeitungsfläche ermöglicht. Insbesondere kann die Strahlformungseinrichtung eine Matrix von Veränderungselementen umfassen, wobei die Veränderungselemente eingerichtet sind, um Bestandteile des Laserstrahls, welche auf die Veränderungselemente auftreffen, in ihrer Phase und/oder Amplitude und/oder Intensität zu verändern. Die Veränderungselemente können also eingerichtet sein, um, beispielsweise in einer Ebene senkrecht zu einer optischen Achse des Laserstrahls, einen oder mehrere den Laserstrahl charakterisierende Parameter lokal zu verändern, beispielsweise einen oder mehrere Laserparameter, ausgewählt aus der Gruppe bestehend aus der Phase, der Amplitude, der Intensität und der Polarisation. Unter einer Matrix ist dabei allgemein ein mindestens zweidimensionales Feld der Veränderungselemente zu verstehen, welches beispielsweise durch ein Koordinatensystem charakterisiert sein kann. Beispielsweise kann es sich dabei um ein kartesisches Koordinatensystem oder ein Polarkoordinatensystem handeln. So können in der Matrix beispielsweise in jeder Raumrichtung des Koordinatensystems mindestens zwei der genannten Veränderungselemente angeordnet sein. Beispielsweise kann die Matrix in einer Ebene aufgespannt sein, beispielsweise einer Ebene senkrecht zur optischen Achse des Laserstrahls. Beispielsweise kann es sich bei dieser Matrix um eine rechteckige Matrix handeln, bei welcher in jeder Raumrichtung mindestens zwei der Veränderungselemente angeordnet sind. Alternativ oder zusätzlich ist auch eine runde und insbesondere kreisförmige Matrix möglich, bei welcher die Veränderungselemente beispielsweise ringförmig angeordnet sind. Auch andere Ausgestaltungen der Strahlformungseinrichtung sind grundsätzlich möglich.

Der Laserstrahl kann mit der Matrix der Strahlformungseinrichtung auf verschiedene Weisen wechselwirken, welche abhängig sind, von der Ausgestaltung der Veränderungselemente. Beispielsweise kann der Laserstrahl die Matrix durchdringen, sodass beispielsweise eine transmissive Strahlformungseinrichtung verwendet werden kann. Alternativ oder zusätzlich kann die Matrix jedoch auch vollständig oder teilweise reflektierende Eigenschaften aufweisen, sodass die Matrix der Strahlformungseinrichtung beispielsweise auch reflektiv eingesetzt werden kann.

Derartige Veränderungselemente, welche eingerichtet sind, um die Phase und/oder die Amplitude und/oder die Intensität des Laserstrahls lokal zu verändern, beispielsweise um ein vorgegebenes Muster am Ort der Bearbeitungsfläche zu erzeugen, sind aus der Praxis grundsätzlich bekannt. So kann beispielsweise eine Phasenverschiebung mittels einer Matrix schaltbarer Veränderungselemente erzeugt werden, wobei die Veränderungselemente beispielsweise die Phasenverschiebung aufgrund schaltbarer doppeltbrechender Eigenschaften und/oder aufgrund eines schaltbaren elektrooptischen Effekts, beispielsweise eines elektrooptischen Effekts erster und/oder zweiter Ordnung, bewirken können. Beispielsweise können zu diesem Zweck doppelbrechende und/oder elektrooptische Materialien eingesetzt werden, beispielsweise sogenannte Pockels-Zellen und/oder Kerr-Zellen. Alternativ oder zusätzlich können auch beispielsweise akustooptische Effekte eingesetzt werden. Die Veränderungselemente können einfach oder mehrfach von dem Laserstrahl passiert werden. Die Veränderungselemente können auch zusammenwirken mit einem oder mehreren weiteren Elementen, wie beispielsweise Filtern und/oder Polarisationsfiltern. Beispielsweise können die Veränderungselemente auch lokal eine Polarisationsrichtung des Laserstrahls verändern, sodass beispielsweise innerhalb des Laserstrahls am Ort der Strahlformungseinrichtung ein Muster mit Bereichen unterschiedlicher Polarisationsrichtungen entsteht. Eine Polarisationsrichtung kann beispielsweise durch entsprechende polarisationsdrehende Elemente beeinflusst werden, beispielsweise durch optisch aktive Materialien wie beispielsweise Flüssigkristalle und/oder anorganische optisch aktive Kristalle und/oder Zucker. Auch eine derartige Matrix von Veränderungselementen, welche die Polarisation und insbesondere die Polarisationsrichtung beeinflussen können und auf diese Weise beispielsweise ein Muster unterschiedlicher Polarisationsrichtungen in dem Laserstrahl erzeugen können, können allein oder in Zusammenwirkung mit anderen Elementen eingesetzt werden, um beispielsweise am Ort der Bearbeitungsfläche ein Intensitätsmuster zu erzeugen. So können beispielsweise lokal am Ort der Strahlformungseinrichtung Muster von Polarisationsrichtungen eingestellt werden, wobei beispielsweise zwischen der Strahlformungseinrichtung und dem Werkstück bzw. der Bearbeitungsfläche ein oder mehrere Polarisationsrichtungs-selektive Elemente vorgesehen sein können, beispielsweise dichroitische Spiegel und/oder Polarisationsfilter und/oder Polarisationsstrahlteiler. Auf diese Weise kann beispielsweise mittels der Strahlformungseinrichtung und der dort erfolgenden Aufprägung eines Musters bestimmter optischer Parameter in dem Laserstrahl am Ort der Bearbeitungsfläche ein Intensitätsmuster erzeugt werden. Dieses Intensitätsmuster kann insbesondere frei einstellbar sein.

Die Veränderungselemente können insbesondere elektronisch ansteuerbar sein. Dies kann insbesondere nach bekannten Prinzipien erfolgen, da beispielsweise der oben genannte elektrooptische Effekt elektronisch steuerbar ist. Alternativ oder zusätzlich kann auch, wie beispielsweise aus Flüssigkristallanzeigen bekannt, eine Polarisationsdrehung durch Änderung eines elektrischen Feldes erzielt werden. Auch andere Arten elektrisch ansteuerbarer Veränderungselemente sind denkbar, beispielsweise indem die Veränderungselemente eine Matrix von elektrisch ansteuerbaren Mikrospiegeln, insbesondere auf Basis von Halbleitermaterialien (beispielsweise sogenannte MEMS), herstellbar nach Verfahren der Mikrosystemtechnik, umfassen können.

Die Veränderungselemente und deren Matrix können insbesondere mittels eines Pixelmusters angesteuert werden, also mittels eines Bildmusters, vorzugsweise eines digitalen Bildmusters, welches beispielsweise mittels einer Datenverarbeitungsvorrichtung vorgegeben werden kann. Beispielsweise kann auf einem Computer ein derartiges Bildmuster automatisch oder manuell erzeugt werden, welches dann, beispielsweise mittels einer entsprechenden Ansteuerung, auf die Matrix der Veränderungselemente übertragen werden kann.

Mittels der Veränderungselemente kann insbesondere in einer Ebene senkrecht zu einer optischen Achse des Laserstrahls ein Muster einer ortsabhängigen Phasenmodulation erzeugt werden. Dieses Muster kann beispielsweise aus mehreren Bereichen bestehen, welche sich in mindestens zwei Dimensionen aneinander anschließen, wobei in unterschiedlichen Bereichen die Phasenlage des Laserstrahls jeweils frei oder innerhalb eines vorgegebenen Bereichs einstellbar sein kann. Auf diese Weise kann ein Phasenmuster in der Ebene senkrecht zur optischen Achse des Laserstrahls erzeugt werden. Bei dem Verfahren kann weiterhin zwischen der Strahlformungseinrichtung und der Bearbeitungsfläche mindestens ein fokussierendes Element verwendet werden, beispielsweise mindestens eine Linse und/oder mindestens ein Spiegel mit fokussierenden Eigenschaften. Derartige fokussierende Elemente können insbesondere transformierend wirken, sodass das Muster der ortsabhängigen Phasenmodulation am Ort der Strahlformungseinrichtung in ein Muster einer orstabhängigen Intensitätsmodulation am Ort der Bearbeitungsfläche, also auf der Bearbeitungsfläche, transformiert wird. Eine derartige Transformation findet beispielsweise statt, indem einem kollimierten und/oder homogenisierten Laserstrahl am Ort der Strahlformungseinrichtung beispielsweise mittels der Matrix der Veränderungselemente das oben beschriebene Phasenmuster aufgeprägt wird, welches dann durch eine Fokussierung mittels des fokussierenden Elements durch eine dabei auftretende Fourier-Transformation in ein entsprechendes Intensitätsmuster auf der Bearbeitungsfläche transformiert wird.

Die Strahlformungseinrichtung kann insbesondere einen sogenannten Spatial Light Modulator (SLM) aufweisen und/oder mindestens ein Mikrospiegelsystem aufweisen. Unter einem Spatial Light Modulator ist allgemein ein räumlicher Modulator für Licht zu verstehen, welcher eingerichtet ist, um dem Licht räumlich, beispielsweise in einer Ebene senkrecht zu einer Ausbreitungsrichtung des Lichts, eine Modulation aufzuprägen. Wie oben ausgeführt, kann es sich bei dieser Modulation um eine lokale Veränderung eines oder mehrerer der Parameter Phase, Amplitude, Intensität und Polarisation handeln, sodass beispielsweise der Wert dieser Parameter vom Ort in der Ebene senkrecht zur Ausbreitungsrichtung abhängt. Insbesondere kann es sich um einen elektronisch ansteuerbaren SLM handeln. Beispielsweise kann der SLM eine zweidimensionale, beispielsweise rechteckige, Matrix von Veränderungselementen aufweisen, beispielsweise gemäß der obigen Beschreibung. Der SLM kann beispielsweise transmissiv und/oder reflektiv betrieben werden. Insbesondere kann der SLM eine Matrix von Flüssigkristallelementen aufweisen, welche einzeln oder gruppenweise elektrisch ansteuerbar sind und welche eingerichtet sind, um eine Phasenlage und/oder Polarisation derjenigen Bestandteile des Laserstrahls, welche durch das jeweilige Flüssigkristallelement hindurchtreten, gezielt zu beeinflussen. Auf diese Weise lässt sich beispielsweise, wie oben beschrieben, mittels des SLM dem Laserstrahl am Ort der Strahlformungseinrichtungen in einer Ebene senkrecht zur Ausbreitungsrichtung des Laserstrahls ein Phasenlagen-Muster aufprägen.

Die Strahlformungseinrichtung kann insbesondere elektronisch ansteuerbar sein, wobei durch die elektronische Ansteuerung das Strahlprofil einstellbar ist, insbesondere frei einstellbar ist, beispielsweise indem ein Bildmuster für die elektronische Ansteuerung der Strahlformungseinrichtung vorgegeben werden kann, nach welchem dann eine ortsabhängige Beeinflussung eines oder mehrerer der oben genannten Parameter des Laserstrahls am Ort der Strahlformungseinrichtung erfolgen kann, beispielsweise indem dem Laserstrahl in einer Ebene senkrecht zur Ausbreitungsrichtung des Laserstrahls, welche auch als optische Achse bezeichnet wird, ein Muster in einem oder mehreren der genannten Parameter der Phase, der Amplitude, der Intensität und der Polarisation aufgeprägt wird, so dass dieser Parameter in der genannten Ebene ortsabhängig ist.

Der Laserstrahl kann insbesondere vor Auftreffen auf die Strahlformungseinrichtung aufgeweitet werden. Insbesondere kann vor der Strahlformungseinrichtung, beispielsweise zwischen einer Laserquelle und der Strahlformungseinrichtung, mindestens eine optische Vorrichtung vorgesehen sein, welche den Laserstrahl aufweitet und/oder welche den Laserstrahl homogenisiert. Dies kann beispielsweise mittels entsprechender Linsensysteme auf einfache Weise erfolgen.

Der Laserstrahl kann insbesondere nach Passieren der Strahlformungseinrichtung fokussiert werden, beispielsweise indem dieser auf die Bearbeitungsfläche fokussiert wird. Diese Ausgestaltung des Verfahrens ist insbesondere dann von Vorteil, wenn die Strahlformungseinrichtung eingerichtet ist, um am Ort der Strahlformungseinrichtung dem Laserstrahl ein Phasenmuster aufzuprägen, welches dann, wie oben ausgeführt, durch die Fokussierung in ein Intensitätsmuster am Ort der Bearbeitungsfläche transformiert wird.

Alternativ oder zusätzlich kann das Verfahren jedoch auch derart durchgeführt werden, dass die Strahlformungseinrichtung beispielsweise eingerichtet ist, um am Ort der Strahlformungseinrichtung ein Intensitätsmuster zu erzeugen. In diesem Fall ist es besonders bevorzugt, wenn zwischen der Strahlformungseinrichtung und der Bearbeitungsfläche mindestens ein Abbildungssystem vorgesehen ist, wobei beispielsweise das Abbildungssystem eingerichtet ist, um das Intensitätsmuster am Ort der Strahlformungseinrichtung in ein entsprechendes identisches, vergrößertes oder verkleinertes Intensitätsmuster am Ort der Bearbeitungsfläche umzuwandeln. Derartige Abbildungssysteme können beispielsweise ein oder mehrere Objektive umfassen.

Während der Durchführung des Verfahrens kann insbesondere die Strahlformungseinrichtung verändert werden. So kann das Verfahren insbesondere eine Sequenz von mindestens zwei verschiedenen Beleuchtungsschritten umfassen, vorzugsweise mindestens drei verschiedene Beleuchtungsschritte oder mehr verschiedene Beleuchtungsschritte, wobei in den verschiedenen Beleuchtungsschritten die Bearbeitungsfläche des Werkstücks mit unterschiedlichen Strahlprofilen des Laserstrahls beleuchtet wird. Beispielsweise kann ein erster Beleuchtungsschritt vorgesehen sein, in welchem der Laserstrahl am Ort der Bearbeitungsfläche einen ersten Durchmesser und/oder Äquivalentdurchmesser und/oder eine erste Geometrie aufweist und mindestens ein zweiter Beleuchtungsschritt, bei welchem der Laserstrahl auf der Bearbeitungsfläche ein Strahlprofil mit einem zweiten, vom ersten Durchmesser verschiedenen Durchmesser und/oder Äquivalentdurchmesser und/oder eine zweite, von der ersten Geometrie abweichende Geometrie aufweist. Auf diese Weise kann durch die genannte Sequenz beispielsweise nacheinander ein Abtrag mit unterschiedlichen Strahlprofilen erfolgen, sodass beispielsweise das Verfahren allgemein eingesetzt werden kann, um dreidimensionale Oberflächen herzustellen.

Die Strahlprofile können insbesondere jeweils auf der Bearbeitungsfläche ein Muster beleuchteter und unbeleuchteter Bereiche bilden, insbesondere ein Pixelmuster. In den Beleuchtungsschritten kann jeweils eine Matrix von Veränderungselementen in unterschiedlicher Weise angesteuert werden, insbesondere eine Matrix von Veränderungselementen, welche gemäß der obigen Möglichkeiten ausgestaltet sein können.

In den unterschiedlichen Beleuchtungsschritten können beispielsweise jeweils in unterschiedlichen Ebenen des Werkstücks Löcher unterschiedlicher Geometrie und/oder unterschiedlicher Tiefe in das Werkstück eingebracht werden. Insbesondere kann das Verfahren somit zu einer dreidimensionalen Oberflächengestaltung eingesetzt werden.

Weitere mögliche Ausgestaltungen betreffen die Laserbearbeitungsvorrichtung. So kann die Laserbearbeitungsvorrichtung insbesondere eine Steuerung aufweisen, insbesondere eine Steuerung mit mindestens einer Datenverarbeitungsvorrichtung, wobei die Steuerung die Strahlformungseinrichtung beispielsweise derart programmieren kann, dass das Strahlprofil am Ort der Bearbeitungsfläche frei programmierbar ist. Beispielsweise kann dem Strahlprofil am Ort der Bearbeitungsfläche mittels der Steuerung ein Muster aufgeprägt werden, beispielsweise ein Intensitätsmuster.

Wenn die Laserbearbeitungsvorrichtung mindestens eine Steuerung aufweist, kann die Steuerung insbesondere eingerichtet sein, um eine Sequenz von mindestens zwei verschiedenen Beleuchtungsschritten durchzuführen, wobei in den mindestens zwei verschiedenen Beleuchtungsschritten die Bearbeitungsfläche des Werkstücks mit unterschiedlichen Strahlprofilen des Laserstrahls beleuchtet wird.

Die Laserquelle umfasst mindestens einen Ultrakurzpulslaser mit einer Pulsdauern von maximal 100 Pikosekunden. Wie oben ausgeführt, kann die Strahlformungseinrichtung insbesondere einen so genannten Spatial Light Modulator aufweisen, welcher transmissiv und/oder reflektiv betrieben werden kann.

Insbesondere kann die Strahlformungseinrichtung mindestens eine Matrix von Veränderungselementen aufweisen, welche eingerichtet sein kann, um in einer Ebene senkrecht zur optischen Achse des Laserstrahls, also in einer Ebene senkrecht zur Ausbreitungsrichtung des Laserstrahls am Ort der Strahlformungseinrichtung, ein Muster von Bereichen unterschiedlicher Parameter des Laserstrahls zu erzeugen. Insbesondere kann die Strahlformungseinrichtung eingerichtet sein, um am Ort der Strahlformungseinrichtung ein Intensitätsmuster zu erzeugen. In diesem Fall ist es besonders bevorzugt, wenn die Laserbearbeitungsvorrichtung zwischen der Strahlformungseinrichtung und der Bearbeitungsfläche des Werkstücks mindestens ein Abbildungssystem aufweist, wobei das Intensitätsmuster am Ort der Strahlformungsrichtung in ein entsprechendes Intensitätsmuster auf der Bearbeitungsfläche abgebildet wird, wobei das abgebildete Muster ein identisches Muster, ein vergrößertes Muster oder ein verkleinertes Muster umfassen kann.

Alternativ oder zusätzlich kann die Laserbearbeitungsvorrichtung auch derart eingerichtet sein, dass die Strahlformungseinrichtung, wie oben ausgeführt, in der Ebene senkrecht zur optischen Achse des Laserstrahls ein Phasenmuster erzeugt, sodass beispielsweise eine Matrix an Bereichen unterschiedlicher Phasen oder Phasenlagen (beide Begriffe werden hier synonym verwendet) des Laserstrahls erzeugt werden kann. In diesem Fall ist es besonders bevorzugt, wenn die Laserbearbeitungsvorrichtung zwischen der Strahlformungseinrichtung und der Bearbeitungsfläche des Werkstücks mindestens ein fokussierendes Element aufweist, sodass das Phasenmuster am Ort der Strahlformungseinrichtung in ein Intensitätsmuster am Ort der Bearbeitungsfläche umgewandelt wird. Allgemein kann die Laserbearbeitungsvorrichtung also beispielsweise zwischen der Strahlformungseinrichtung und dem Werkstück mindestens eines fokussierendes Element und/oder mindestens eine Abbildungsoptik, beispielsweise mindestens ein Objektiv, aufweisen.

Die Laserbearbeitungsvorrichtung kann weiterhin zwischen der Strahlformungseinrichtung und dem Werkstück mindestens eine Blende aufweisen. Mittels der Blende, beispielsweise einer Irisblende, können unerwünschte Bestandteile des Laserstrahls vom Werkstück ferngehalten werden.

Die Laserbearbeitungsvorrichtung kann weiterhin mindestens eine Halterung zur Neuaufnahme des Werkstücks aufweisen. Diese Halterung kann das Werkstück an einem vorgegeben Ort fixieren und/oder kann auch eingerichtet sein, um das Werkstück relativ zu dem Laserstrahl zu positionieren und/oder zu orientieren. Beispielsweise kann die Halterung zu diesem Zweck mindestens eine Positionierungsvorrichtung aufweisen, beispielsweise mit einem oder mehreren Aktoren zur Positionierung und/oder Orientierung des Werkstücks.

Der Laserstrahl kann an einem festen Ort auf der Bearbeitungsfläche auftreffen. Dementsprechend kann beispielsweise die gesamte Optik der Laserbearbeitungsvorrichtung starr ausgebildet sein, sodass beispielsweise lediglich das Werksrück relativ zum Laserstrahl positioniert und/oder orientiert werden kann. Alternativ oder zusätzlich kann jedoch auch der Laserstrahl bewegbar und/oder positionierbar und/oder orientierbar ausgestaltet sein, beispielsweise indem die Laserbearbeitungsvorrichtung ein oder mehrere den Laserstrahl positionierende Elemente wie beispielsweise ein oder mehrere bewegbare Spiegel aufweist, beispielsweise ein oder mehrere der oben beschriebenen Galvano-Scanner.

Das Verfahren wird erfindungsgemäß derart durchgeführt , dass ein Laserabtrag (Laserablation) von Material des Werkstücks derart erfolgt, dass kein Aufschmelzen des Materials des Werkstücks erfolgt oder im Wesentlichen kein derartiges Aufschmelzen. Das Strahlprofil am Ort der Bearbeitungsfläche kann dementsprechend derart eingestellt werden, dass dieses ein Muster beleuchteter und unbeleuchteter Bereiche aufweist, wobei in den beleuchteten Bereichen die Intensität des Laserstrahls oberhalb einer für eine Verdampfung des Materials erforderlichen Intensität liegt, in den unbeleuchteten Bereichen jedoch darunter, sodass beispielsweise keine Bereiche auftreten, in welchen die Intensität des Laserstrahls zwischen einer für ein Aufschmelzen des Materials erforderlichen Intensitätsschwelle und einer für eine Verdampfung des Materials erforderlichen Intensitätsschwelle liegt. Lediglich im Bereich eines Übergangs zwischen den beleuchteten und unbeleuchteten Bereichen können derartige Situationen auftreten, wobei diese Bereiche jedoch vorzugsweise klein gehalten werden, sodass ein Aufschmelzen der Kanten der zu erzeugenden Strukturen klein gehalten werden kann. Das Verfahren kann insbesondere derart durchgeführt werden, dass ein schneller Strahlformwechsel, also ein schneller Wechsel der Strahlprofile am Ort der Bearbeitungsfläche durchgeführt werden kann. Dies kann insbesondere, wie oben ausgeführt, durch frei programmierbare SLMs erzielt werden.

Das vorgeschlagene Verfahren und die vorgeschlagene Laserbearbeitungsvorrichtung in einer oder mehreren der oben beschriebenen Ausgestaltungen weisen gegenüber bekannten Vorrichtungen und Verfahren der genannten Art zahlreiche Anteile auf. Anstelle eines Scan-Verfahrens, bei welchem sequenziell nebeneinander liegende Bereiche der Bearbeitungsfläche des Werkstücks abgescannt werden, kann mittels des vorgeschlagenen Verfahrens insbesondere eine vollständige oder teilweise Geometrie auf dem zu bearbeitenden Werkstück mit Hilfe einer flexiblen Strahlformungseinrichtung erfolgen. Auf diese Weise kann das Strahlprofil derart geformt werden, dass es am Ort der Bearbeitungsfläche, beispielsweise in der Bearbeitungsebene, einer gewünschten Abtragsgeometrie entspricht. Damit kann beispielsweise pro Laserpuls eine komplette Schicht der gewünschten Form im Nano- bis Mikrometerbereich abgetragen werden. Insbesondere kann bei dem vorgeschlagenen Verfahren ein "Laserstanzen" ermöglicht werden, mit einer fast beliebigen Geometrie, wobei ein präziser Abtrag erfolgen kann.

Bei dem vorgeschlagenen Verfahren kann insbesondere der Abtrag des Materials des Werkstücks zumindest näherungsweise schmelzfrei gehalten werden. Zu diesem Zweck kann, wie oben ausgeführt, die Fluenz H des Laserstrahls konstant gehalten werden. Da sich die Pulsenergie Eₚ in der Regel mit der Fläche des Bearbeitungsspots Aₛₚₒₜ aus Eₚ=Aₛₚₒₜ·H ergibt, kann in der Regel ohne Nachteile mit deutlich größeren Pulsenergien gearbeitet werden als bei herkömmlichen Verfahren. Gleichzeit steigt das Abtragsvolumen pro Puls, und die Bearbeitung wird entsprechend schneller als dies mit einem Abscannen durch einen Laserstrahl möglich wäre. Gleichwohl kann jedoch zusätzlich ein Scanverfahren eingesetzt werden, wie oben ausgeführt.

Die flexible Strahlformung am Ort der Bearbeitungsfläche kann, wie oben beschrieben, insbesondere durch Ansteuerung der Pixel eines Spatial Light Modulator (SLM) auf einfach und zuverlässige Weise realisiert werden. Für mehrstufige Geometrien kann damit mit einer einprogrammierten Strahlform beispielsweise eine erste Ebene abgetragen werden. Anschließend kann dann, beispielsweise durch Umprogrammieren des SLM, mit einer anderen Strahlform die jeweils weitere Stufe eingetrieben werden. Dadurch können allgemein im Rahmen des vorliegenden Verfahrens durch eine entsprechende Steuerung, beispielsweise eine programmierbare Steuerung eines SLM, komplexe dreidimensionale Geometrien mit bisher unerrreichter Geschwindigkeit präzise hergestellt werden.

### Kurze Beschreibung der Zeichnungen

Weitere Einzelheiten und Merkmale möglicher Ausgestaltungen der Erfindung sind in den nachfolgenden Ausführungsbeispielen und Zeichnungen dargestellt. Die Erfindung ist nicht auf die Ausführungsbeispiele und Zeichnungen beschränkt.

Es zeigen:
- Figur 1: ein Ausführungsbeispiel eines erfindungsgemäßen Verfahrens zur Bearbeitung eines Werkstücks mit Laserstrahlung zum Zweck einer dreidimensionalen Laserablation;
- Figur 2: ein erstes Ausführungsbeispiel einer erfindungsgemäßen Laserbearbeitungsvorrichtung; und
- Figur 3: ein zweites Ausführungsbeispiel einer erfindungsgemäßen Laserbearbeitungsvorrichtung.

### Ausführungsformen der Erfindung

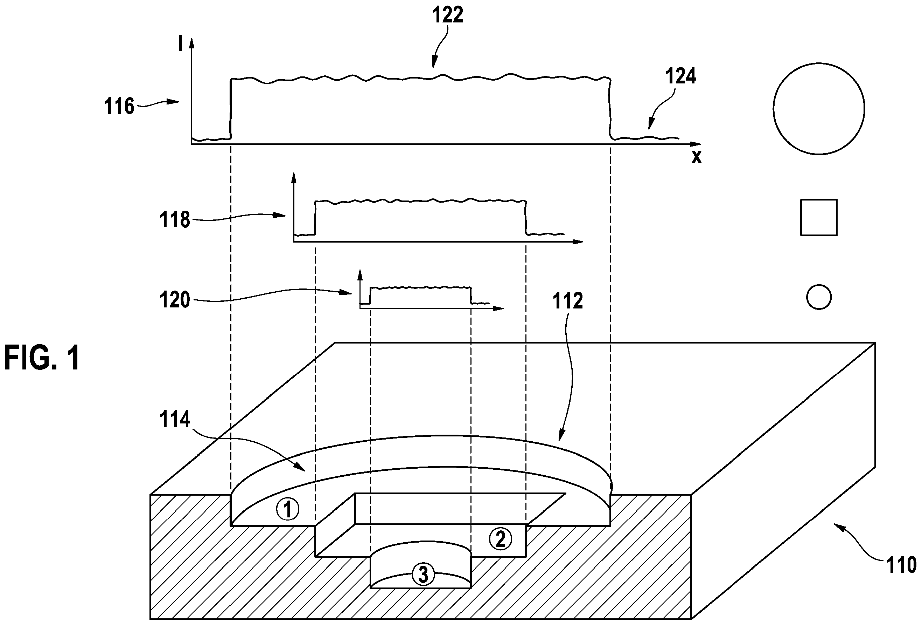

In Figur 1 ist schematisch ein Verfahren zur Bearbeitung eines Werkstücks 110 mit einer Bearbeitungsfläche 112 stark schematisiert dargestellt. Bei dem Verfahren wird das Werkstück 110 mit einer in Figur 1 nicht dargestellten Laserstrahlung mit mindestens einem Laserstrahl bearbeitet, wobei hierbei exemplarisch eine Laserablation erfolgt. Diese Laserablation erzeugt in dem dargestellten Ausführungsbeispiel eine dreidimensionale Geometrie 114 in dem Werkstück 110, welche in Figur 1 in einer Teilschnittdarstellung gezeigt ist. Dieses Verfahren kann auch als "Laserstanzen" zur Erzeugung der dreidimensionalen Geometrie 114 bezeichnet werden.

Bei dem Ausführungsbeispiel des vorgeschlagenen Verfahrens umfasst das Verfahren eine Sequenz von mindestens zwei verschiedenen Beleuchtungsschritten, wobei in Figur 1 symbolisch drei verschiedene Beleuchtungsschritte dargestellt sind. In jedem dieser Beleuchtungsschritte, welche nacheinander durchgeführt werden können, wird das Werkstück 110 jeweils mit einem unterschiedlichen Strahlprofil des Laserstrahls beleuchtet. Exemplarisch sind in Figur 1 drei verschiedene Strahlprofile 116, 118 und 120 dargestellt. In jedem dieser Strahlprofile 116-120 weist der Laserstrahl am Ort der Bearbeitungsfläche 112 ein Muster beleuchteter Bereiche 122 und unbeleuchteter Bereiche 124 auf. Auch andere Strahlprofile am Ort der Bearbeitungsfläche 112 sind jedoch grundsätzlich möglich. Beispielsweise ist in Figur 1 jeweils eine Intensitätsverteilung der Strahlprofile in der in Figur 1 gezeigten Schnittebene des Werkstücks 110 aufgetragen, wobei jeweils die Intensität I gegen den Ort x aufgetragen ist. Das Verfahren kann insbesondere derart durchgeführt werden, dass in den beleuchteten Bereichen 122 die Intensität I oberhalb einer Ablationsschwelle liegt, beispielsweise oberhalb einer Verdampfungsschwelle des Materials des Werkstücks 110, wohingegen in den unbeleuchteten Bereichen 124 die Intensität unterhalb einer Schmelzschwelle des Materials des Werkstücks 110 liegen kann.

Die Strahlprofile 116-120 können sich beispielsweise hinsichtlich Ihrer Durchmesser und/oder Äquivalentdurchmesser und/oder Geometrien unterscheiden. So weisen beispielsweise die Strahlprofile 116-120 exemplarisch in Figur 1 in dieser Reihenfolge sich verkleinernde Durchmesser bzw. Äquivalentdurchmesser auf. Rechts neben den Strahlprofilen 116-120 ist zudem angedeutet, dass die Strahlprofile unterschiedliche Geometrien aufweisen können. So kann das erste Strahlprofil 116 beispielsweise, wie auch das dritte Strahlprofil 120, in Draufsicht eine runde Geometrie aufweisen, wohingegen beispielsweise das zweite Strahlprofil 118 in der exemplarischen Darstellung eine quadratische Geometrie aufweisen kann. Entsprechend entsteht in dem Ausführungsbeispiel gemäß Figur 1 eine Stufengeometrie, welche durch die Abtragsflächen 1, 2 und 3 angedeutet ist. So entspricht die erste Stufe (mit 1 bezeichnet) einem Zustand nach Durchführung des ersten Beleuchtungsschritts mit dem ersten Strahlprofil 116, die symbolisch mit 2 bezeichnete Stufe dem Zustand nach dem zweiten Beleuchtungsschritt mit dem zweiten Strahlprofil 118, und die Ziffer 3 den Zustand nach dem dritten Beleuchtungsschritt mit dem dritten Strahlprofil 120.

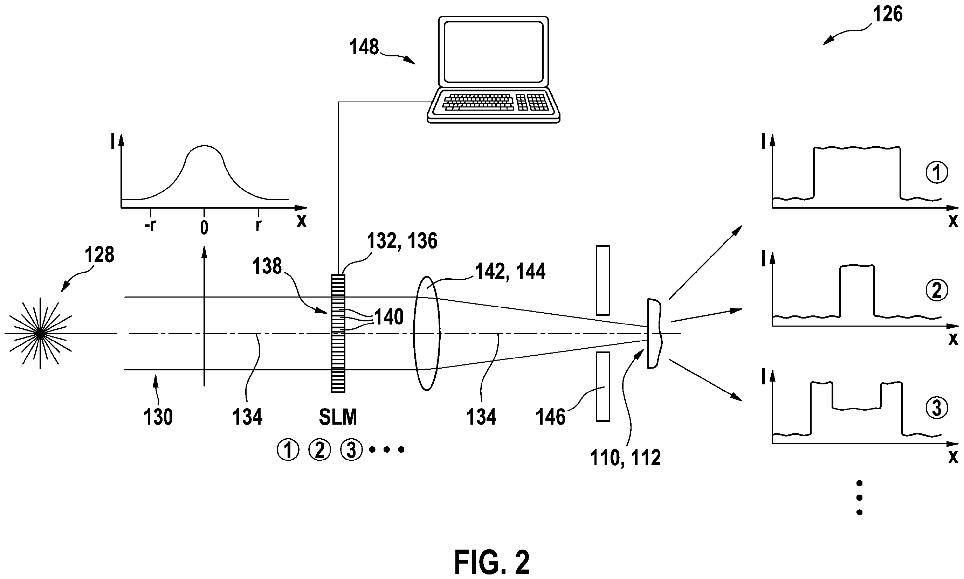

Die flexible Strahlformung in einem erfindungsgemäßen Verfahren kann grundsätzlich auf verschiedene Weisen erfolgen, wobei in allen Fällen mindestens eine Strahlformungseinrichtung zur Erzeugung eines einstellbaren Strahlprofils am Ort der Bearbeitungsfläche 112 eingesetzt wird. Ein erstes Ausführungsbeispiel einer erfindungsgemäß einsetzbaren Laserbearbeitungsvorrichtung 126 ist in Figur 2 gezeigt. Die Laserbearbeitungsvorrichtung umfasst mindestens eine in Figur 1 lediglich angedeutete Laserquelle 128 zum Bereitstellen mindestens eines Laserstrahls 130. Dieser Laserstrahl kann beispielsweise kollimiert und/oder homogenisiert sein oder werden. Wie dargestellt, kann der Laserstrahl 130, insbesondere der kollimierte Laserstrahl 130, beispielsweise ein gaußförmiges Intensitätsprofil aufweisen.

Weiterhin weist die Laserbearbeitungsvorrichtung 126 mindestens eine Strahlformungseinrichtung 132 auf, welche eingerichtet ist, um ein einstellbares Strahlprofil am Ort der Bearbeitungsfläche 112 des Werkstücks 110 (in Figur 2 lediglich angedeutet) zu erzeugen. In Figur 2 sind exemplarisch drei Strahlprofile gezeigt, bezeichnet durch die Ziffern 1, 2 und 3, wiederum in Form einer Intensitätsverteilung der Intensität I als Funktion des Ortes x, beispielsweise als Funktion einer Ortkoordinate senkrecht zu einer optischen Achse 134 des Laserstrahls 130. Beispielsweise können digitale Stufenprofile mit beleuchteten und unbeleuchteten Bereichen erzeugt werden (siehe zum Beispiel Intensitätsverteilung 1), oder auch Bereiche mit mehreren Stufen (siehe beispielsweise Intensitätsverteilung 3).

Die Strahlformungseinrichtung 132 kann auf verschiedene Weisen ausgestaltet sein. In Figur 2 ist ein Ausführungsbeispiel gezeigt, bei welchem diese Strahlformungseinrichtung 132 einen sogenannten Spatial Light Modulator (SLM) 136 umfasst. Dieser SLM kann beispielsweise in dem dargestellten Ausführungsbeispiel derart ausgestaltet sein, dass dieser in einer Richtung senkrecht zur optischen Achse 134 mittels einer entsprechenden Matrix 138 von Veränderungselementen 140 ein Muster einer ortsabhängigen Phasenmodulation des Laserstrahls 130 schafft. Beispielsweise können auf diese Weise, entsprechend der Matrix 138, in einer Ebene senkrecht zur optischen Achse 134 jeweils Bereiche unterschiedlicher Phasenlage des Laserstrahls 130 am Ort der Strahlformungseinrichtung 132 erzeugt werden. Zwischen dem Werkstück 110 und der Strahlformungseinrichtung 132 kann mindestens ein fokussierendes Element vorgesehen sein, also mindestens ein Element, welches eingerichtet ist, um das Muster unterschiedlicher Phasenlagen des Laserstrahls 130 am Ort der Strahlformungseinrichtung 132 in ein Intensitätsverteilungsmuster am Ort der Bearbeitungsfläche 112 umzuwandeln. Beispielsweise kann es sich bei dem fokussierenden Element 142 um mindestens eine Linse 144 handeln. Das fokussierende Element 142 kann, physikalisch betrachtet, eine Fourier-Transformation des Phasenlagen-Musters am Ort der Strahlformungseinrichtung 132 vornehmen, sodass die Intensitätsverteilung I am Ort der Bearbeitungsfläche 112 sich als Fourier-transformierte des Laserstrahls 130 am Ort der Strahlformungseinrichtung 132 ergibt. Zwischen dem fokussierenden Element 142 und der Bearbeitungsfläche 112 können optional ein oder mehrere Blenden 146 vorgesehen sein, beispielsweise um Störstrahlung zu unterdrücken und/oder unerwünschte Randeffekte zu vermeiden.

Die Strahlformungseinrichtung 132 kann beispielsweise über mindestens eine Steuerung 148 der Laserbearbeitungsvorrichtung 126 angesteuert werden, sodass beispielsweise ein Muster der Intensitätsverteilung am Ort der Bearbeitungsfläche 112 durch eine entsprechende Einstellung der Matrix 138, beispielsweise durch eine entsprechende elektrische Ansteuerung, einstellbar sein kann.

In dem SLM 136 kann beispielsweise eine Phasenverzögerung für die jeweiligen Bildpunkte des Musters mittels der Matrix 138 über eine elektrische Ansteuerung in jedem Pixel der Matrix 138 individuell einstellbar sein. Dies kann beispielsweise über Flüssigkristalle und/oder über einen elektrooptischen Effekt erfolgen. Nach diesem Phasenelement trifft der Laserstrahl 130 durch die Fokussierlinse 144 und/oder eine andere Art der fokussierenden Optik, welche als fokussierendes Element 142 wirkt. Durch die kombinierte Phasenmodulation und Fokussierung ergibt sich in der Arbeitsebene der Laserbearbeitungsvorrichtung 126, in welcher die Bearbeitungsfläche 112 des Werkstücks 110 anzuordnen ist, je nach Einstellung des phasenstellenden SLM 136 eine andere Intensitätsverteilung. Die Einstellung des SLM 136 für eine gewünschte Form der Intensitätsverteilung in der Arbeitsebene kann beispielsweise im Voraus über wellenoptische Simulationen bestimmt werden und/oder kann durch Messungen des Strahlformungsergebnisses experimentell oder auch online ermittelt oder verfeinert werden. Störende Leistungsanteile, welche unter anderen Ablenkwinkeln aus dem optischen System austreten können, können bei Bedarf durch die mindestens eine Blende 146 vom Werkstück 110 abgeschirmt werden.

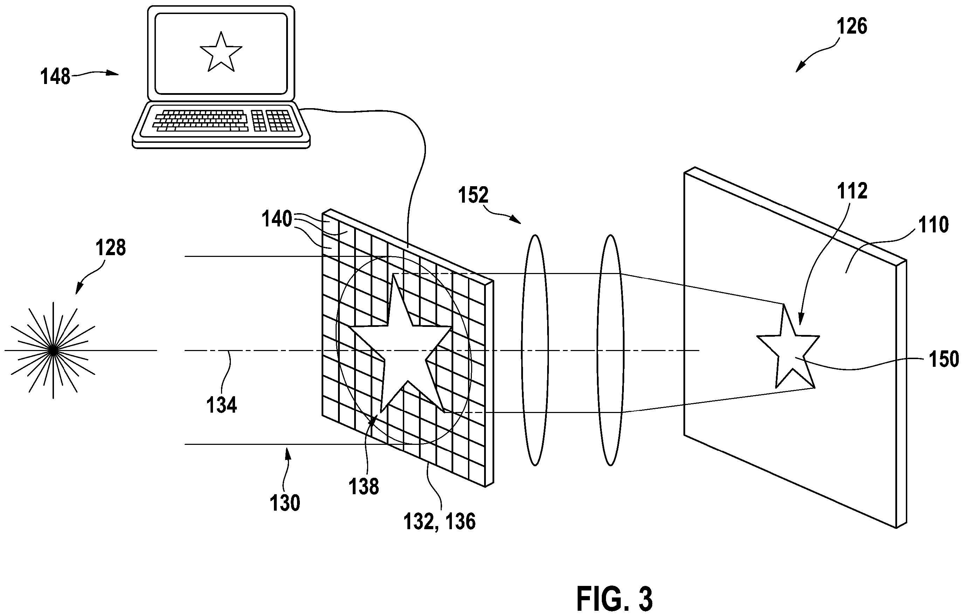

Alternativ oder zusätzlich zu der in Figur 2 gezeigten Ausgestaltung der Laserbearbeitungsvorrichtung 126 und/oder der Strahlformungseinrichtung 132 können auch andere Vorrichtungen erfindungsgemäß eingesetzt werden. So ist in Figur 3 ein grundsätzlich zu Figur 2 analoges Ausführungsbeispiel gezeigt, welches sich im Wesentlichen durch die Ausgestaltung der Strahlformungseinrichtung 132 unterscheiden kann. In diesem Fall wird eine Strahlformungseinrichtung 132 mit einer Mehrzahl von Veränderungselementen 140 verwendet, welche beispielsweise in einer Ebene senkrecht zur optischen Achse 134 ein Muster einer Intensitätsverteilung des Laserstrahls 130 erzeugen können. Allgemein kann beispielsweise über eine Modulation einer Intensität jedes Veränderungselement 140, also jedes Pixels der Matrix 134, eine beliebige Strahlverteilung im Rohstrahl des Laserstrahls 130 vor Passieren der Strahlformungseinrichtung 132 erzeugt werden. Dabei können nicht zum gewünschten Strahlprofil passende Leistungsanteile räumlich abgeschnitten oder lokal abgeschwächt werden. Beispielsweise können einzelne Pixel der Matrix 138 auf durchlässig geschaltet werden, andere wiederum als auf undurchlässig. Wiederum kann die Strahlformungseinrichtung 132 beispielsweise durch eine Steuerung 148 angesteuert werden. Das Muster der Matrix 138 kann beispielsweise, unter Berücksichtigung entsprechender Verzerrungen und/oder Vergrößerungen und/oder Verkleinerungen, im Wesentlichen einem Muster eines abzutragenden Bereichs 150 auf der Bearbeitungsfläche 112 entsprechen. Dementsprechend kann auch das mittels der Steuerung 148 vorgegebene Muster für die Matrix 138 im Wesentlichen in seiner Gestalt zu der Geometrie des abzutragenden Bereichs 150 korrelieren. Mittels der durchlässigen Pixel der Matrix 138 kann somit ein Abtrag erzeugt werden. Die Intensitätsverteilung in der Ebene senkrecht zur optischen Achse 134 am Ort der Strahlformungseinrichtung 132 kann mittels einer entsprechenden Abbildungsoptik 152, beispielsweise mittels eines Objektivs und/oder einer ähnlichen abbildenden Vorrichtung, auf die Bearbeitungsfläche 112 abgebildet werden, sodass ein Abbild des von der Matrix 138 erzeugten Musters der Intensitätsverteilung auf der Bearbeitungsfläche 112 entsteht. Dieses Abbild kann von seiner Geometrie und/oder Größe her identisch zu dem Muster am Ort der Matrix 138 sein, kann jedoch auch vergrößert, verkleinert oder verzerrt sein. Verschiedene Ausgestaltungen sind denkbar.

Damit kann der SLM 136 beispielsweise wie eine Kombination aus einer frei programmierbaren Blendengeometrie mit einer frei programmierbaren Abschwächergeometrie wirken. Neben einem großen Leistungsverlust durch abgeschnittene Strahlbereiche entstehen an dem SLM in vielen Fällen jedoch auch Interferenzeffekte durch Beugung an den Kanten der Blende, welche in Figur 3 nicht dargestellt ist. Durch eine geometrisch-optische Abbildung der Intensitätsverteilung nach der Blende auf die Werkstückoberfläche, also die Bearbeitungsfläche 112 (relay imaging) kann die frei einprogrammierbare Geometrie der Intensitätsverteilung auf dem Werkstück 110 zur Bearbeitung genutzt werden. Damit werden in der Abbildungsebene, in welcher die Bearbeitungsfläche 112 angeordnet wird, die Einflüsse der Beugung auf den Prozess minimiert. Um den in der Regel unvermeidbaren Leistungsverlust durch das Ausblenden von Strahlanteilen zu minimieren, kann insbesondere ein homogenisierter Laserstrahl 130 verwendet werden. Dieser homogenisierte Laserstrahl 130 kann insbesondere gerade so groß sein, dass er eine freie Apertur einer Blende überstrahlt. Zudem kann der Laserstrahl 130 zur Vermeidung von Leistungsverlusten durch teilweises Abschwächen von einzelnen Pixeln der Matrix 138 derart ausgestaltet werden, dass dieser kein Gauß-Profil aufweist, sondern schon vor dem intensitätsstellenden SLM 136 durch eine Strahlformung des Rohstrahls homogenisiert sein kann oder schon homogenisiert von der Laserquelle 128 emittiert wird.

## Patentansprüche

1. Verfahren zur Bearbeitung eines Werkstücks (110) mit Laserstrahlung, zum Zweck einer Laserablation eines Materials, wobei mindestens ein Laserstrahl (130) bereitgestellt wird, wobei der Laserstrahl (130) mittels mindestens einer veränderbaren Strahlformungseinrichtung (132) beeinflusst wird, wobei der Laserstrahl (130) anschließend auf mindestens einer Bearbeitungsfläche (112) des Werkstücks (110) auftrifft, wobei mittels der Strahlformungseinrichtung (132) dem Laserstrahl (130) am Ort der Bearbeitungsfläche (112) mindestens ein vorgegebenes einstellbares Strahlprofil (116, 118, 120) aufgeprägt wird wobei das Verfahren derart durchgeführt wird, dass auf der Bearbeitungsfläche (112) nacheinander mindestens zwei verschiedene Muster beleuchteter und unbeleuchteter Bereiche erzeugt werden, **dadurch gekennzeichnet, dass** die Laserstrahlung aus Laserpulsen mit Pulsdauern von maximal 100 Pikosekunden besteht und dass bei einem Wechsel zwischen zwei verschiedenen Mustern eine Fluenz in den beleuchteten Bereichen der verschiedenen Muster identisch bleibt und so gewählt ist, dass ein schmelzfreier Abtrag des Materials erfolgt.

2. Verfahren nach Anspruch 1, wobei die Strahlformungseinrichtung (132) eine Matrix (138) von Veränderungselementen (140) aufweist, wobei die Veränderungselemente (140) eingerichtet sind, um Bestandteile des Laserstrahls (130), welche auf die Veränderungselemente (140) auftreffen, in ihrer Phase und/oder Amplitude und/oder Intensität und/oder Polarisation zu verändern.

3. Verfahren nach dem vorhergehenden Anspruch, wobei mittels der Veränderungselemente (140) in einer Ebene senkrecht zu einer optischen Achse (134) des Laserstrahls (130) ein Muster einer ortsabhängigen Phasenmodulation erzeugt wird, wobei mittels mindestens eines fokussierenden Elements (142) das Muster der ortsabhängigen Phasenmodulation in ein Muster einer ortsabhängigen Intensitätsmodulation auf der Bearbeitungsfläche (112) transformiert wird.

4. Verfahren nach einem der beiden vorhergehenden Ansprüche, wobei mittels der Veränderungselemente (140) in einer Ebene senkrecht zu einer optischen Achse des Laserstrahls (130) ein Muster einer ortsabhängigen Intensitätsmodulation erzeugt wird, wobei mittels mindestens einer Abbildungsoptik (152) das Muster der ortsabhängigen Intensitätsmodulation in ein Muster einer ortsabhängigen Intensitätsmodulation auf der Bearbeitungsfläche (112) abgebildet wird.

5. Verfahren nach einem der vorhergehenden Ansprüche, wobei die Strahlformungseinrichtung (132) mindestens einen Spatial Light Modulator (136) und/oder mindestens ein Mikrospiegelsystem umfasst.

6. Verfahren nach einem der vorhergehenden Ansprüche, wobei das Verfahren eine Sequenz von mindestens zwei verschiedenen Beleuchtungsschritten umfasst, wobei in den verschiedenen Beleuchtungsschritten die Bearbeitungsfläche (112) des Werkstücks (110) mit unterschiedlichen Strahlprofilen (116, 118, 120) des Laserstrahls (130) beleuchtet wird.

7. Verfahren nach dem vorhergehenden Anspruch, wobei in den unterschiedlichen Beleuchtungsschritten jeweils eine Matrix (138) von Veränderungselementen (140) der Strahlformungseinrichtung (132) in unterschiedlicher Weise angesteuert wird.

8. Verfahren nach einem der zwei vorhergehenden Ansprüche, wobei in den unterschiedlichen Beleuchtungsschritten jeweils in unterschiedlichen Ebenen des Werkstücks (110) Löcher unterschiedlicher Geometrie und/oder unterschiedlicher Tiefe in das Werkstück (110) eingebracht werden.

9. Laserbearbeitungsvorrichtung (126) zur Bearbeitung eines Werkstücks (110) mit Laserstrahlung, wobei die Laserbearbeitungsvorrichtung (126) eine Laserablationsvorrichtung zur Ablation eines Materials ist, wobei die Laserbearbeitungsvorrichtung (126) mindestens eine Laserquelle (128) zum Bereitstellen mindestens eines Laserstrahls (130) aufweist, wobei die Laserbearbeitungsvorrichtung (126) derart eingerichtet ist, dass der Laserstrahl (130) auf mindestens einer Bearbeitungsfläche (112) des Werkstücks (110) auftrifft, wobei die Laserbearbeitungsvorrichtung (126) weiterhin mindestens eine Strahlformungseinrichtung (132) zur Beeinflussung des Laserstrahls (130) aufweist, wobei die Strahlformungseinrichtung (132) eingerichtet ist, um dem Laserstrahl (130) am Ort der Bearbeitungsfläche (112) mindestens ein vorgegebenes einstellbares Strahlprofil (116, 118, 120) aufzuprägen, wobei die Laserbearbeitungsvorrichtung (126) eine Steuerung (148) aufweist und eingerichtet ist, um auf der Bearbeitungsfläche (112) mindestens zwei verschiedene Muster beleuchteter und unbeleuchteter Bereiche (122, 124) zu erzeugen, **dadurch gekennzeichnet, dass** die Laserstrahlung aus Laserpulsen mit Pulsdauern von maximal 100 Pikosekunden besteht, wobei bei einem Wechsel zwischen zwei verschiedenen Mustern eine Fluenz in den beleuchteten Bereichen (122) identisch bleibt und so gewählt ist, dass ein schmelzfreier Abtrag des Materials erfolgen kann.

10. Laserbearbeitungsvorrichtung (126) nach dem vorhergehenden Anspruch, wobei die Steuerung (148) eingerichtet ist, um eine Sequenz von mindestens zwei verschiedenen Beleuchtungsschritten durchzuführen, wobei in den verschiedenen Beleuchtungsschritten die Bearbeitungsfläche (112) des Werkstücks (110) mit unterschiedlichen Strahlprofilen (116, 118, 120) des Laserstrahls (130) beleuchtet wird.

11. Laserbearbeitungsvorrichtung (126) nach einem der vorhergehenden, eine Laserbearbeitungsvorrichtung (126) betreffenden Ansprüche, wobei die Laserbearbeitungsvorrichtung (126) mindestens eine Halterung zur Aufnahme des Werkstücks (110) aufweist.

## Claims

1. Method for machining a workpiece (110) with laser radiation for the purpose of laser ablation of a material, wherein at least one laser beam (130) is provided, wherein the laser beam (130) is influenced by means of at least one variable beam shaping device (132), wherein the laser beam (130) is then incident on at least one machining surface (112) of the workpiece (110), wherein at least one specified settable beam profile (116, 118, 120) is imprinted onto the laser beam (130) at the site of the machining surface (112) by means of the beam shaping device (132), and wherein the method is performed such that at least two different patterns of illuminated and unilluminated regions are generated successively on the machining surface (112), **characterized in that** the laser radiation consists of laser pulses having pulse durations of at most 100 picoseconds and **in that**, in the case of a change between two different patterns, a fluence in the illuminated regions of the different patterns remains identical and is chosen such that a melt-free removal of the material takes place.

2. Method according to Claim 1, wherein the beam shaping device (132) has a matrix (138) of changing elements (140), wherein the changing elements (140) are configured to change components of the laser beam (130) that are incident on the changing elements (140) in terms of their phase and/or amplitude and/or intensity and/or polarization.

3. Method according to the preceding claim, wherein a pattern of a spatially dependent phase modulation is generated by means of the changing elements (140) in a plane perpendicular to an optical axis (134) of the laser beam (130), wherein the pattern of the spatially dependent phase modulation is transformed into a pattern of a spatially dependent intensity modulation on the machining surface (112) by means of at least one focusing element (142).

4. Method according to one of the two preceding claims, wherein a pattern of a spatially dependent intensity modulation is generated by means of the changing elements (140) in a plane perpendicular to an optical axis of the laser beam (130), wherein the pattern of the spatially dependent intensity modulation is imaged into a pattern of a spatially dependent intensity modulation on the machining surface (112) by means of at least one imaging optics (152).

5. Method according to one of the preceding claims, wherein the beam shaping device (132) comprises at least one spatial light modulator (136) and/or at least one micromirror system.

6. Method according to one of the preceding claims, wherein the method comprises a sequence of at least two different illumination steps, wherein the machining surface (112) of the workpiece (110) is illuminated with different beam profiles (116, 118, 120) of the laser beam (130) in the different illumination steps.

7. Method according to the preceding claim, wherein a matrix (138) of changing elements (140) of the beam shaping device (132) is controlled in the different illumination steps in each case in a different way.

8. Method according to one of the two preceding claims, wherein holes of different geometries and/or different depths are introduced into the workpiece (110) in the different illumination steps in each case in different planes of the workpiece (110).

9. Laser machining apparatus (126) for machining a workpiece (110) with laser radiation, wherein the laser machining apparatus (126) is a laser ablation apparatus for ablating a material, wherein the laser machining apparatus (126) has at least one laser source (128) for providing at least one laser beam (130), wherein the laser machining apparatus (126) is configured such that the laser beam (130) is incident on at least one machining surface (112) of the workpiece (110), wherein the laser machining apparatus (126) furthermore has at least one beam shaping device (132) for influencing the laser beam (130), wherein the beam shaping device (132) is configured to imprint at least one specified settable beam profile (116, 118, 120) onto the laser beam (130) at the site of the machining surface (112), wherein the laser machining apparatus (126) has a controller (148) and is configured to generate at least two different patterns of illuminated and unilluminated regions (122, 124) on the machining surface (112), **characterized in that** the laser radiation consists of laser pulses having pulse durations of at most 100 picoseconds, wherein, in the case of a change between two different patterns, a fluence in the illuminated regions (122) remains identical and is chosen such that a melt-free removal of the material can take place.

10. Laser machining apparatus (126) according to the preceding claim, wherein the controller (148) is configured to perform a sequence of at least two different illumination steps, wherein the machining surface (112) of the workpiece (110) is illuminated with different beam profiles (116, 118, 120) of the laser beam (130) in the different illumination steps.

11. Laser machining apparatus (126) according to one of the preceding claims relating to a laser machining apparatus (126), wherein the laser machining apparatus (126) has at least one holder for holding the workpiece (110) .

## Revendications

1. Procédé pour usiner une pièce ouvrée (110) avec un rayonnement laser, en vue d'une ablation au laser d'un matériau, au moins un rayon laser (130) étant fourni, le rayon laser (130) étant influencé au moyen d'au moins un dispositif de mise en forme de rayon (132) modifiable, le rayon laser (130) venant ensuite frapper au moins une surface d'usinage (112) de la pièce ouvrée (110), au moins un profil de rayon (116, 118, 120) réglable prédéfini étant imprimé au rayon laser (130) au moyen du dispositif de mise en forme de rayon (132) à l'endroit de la surface d'usinage (112), le procédé étant mis en œuvre de telle sorte qu'au moins deux modèles différents de zones éclairées et non éclairées sont générés l'un après l'autre sur la surface d'usinage (112), **caractérisé en ce que** le rayonnement laser se compose d'impulsions laser ayant des durées d'impulsion maximales de 100 picosecondes et **en ce que** lors d'un changement entre deux modèles différents, une fluence dans les zones éclairées des différents modèles reste identique et est choisie de telle sorte qu'il se produit un enlèvement sans fusion du matériau.

2. Procédé selon la revendication 1, le dispositif de mise en forme de rayon (132) possédant une matrice (138) d'éléments de modification (140), les éléments de modification (140) étant conçus pour modifier la phase et/ou l'amplitude et/ou l'intensité et/ou la polarisation des composantes du rayon laser (130) qui sont incidentes sur les éléments de modification (140).

3. Procédé selon la revendication précédente, un modèle d'une modulation de phase dépendante du lieu étant généré au moyen des éléments de modification (140) dans un plan perpendiculaire à un axe optique (134) du rayon laser (130), le modèle de la modulation de phase dépendante du lieu étant transformé en un modèle d'une modulation d'intensité dépendante du lieu sur la surface d'usinage (112) au moyen d'au moins un élément de focalisation (142) .

4. Procédé selon l'une des deux revendications précédentes, un modèle d'une modulation d'intensité dépendante du lieu étant généré au moyen des éléments de modification (140) dans un plan perpendiculaire à un axe optique du rayon laser (130), le modèle de la modulation d'intensité dépendante du lieu étant représenté en un modèle d'une modulation d'intensité dépendante du lieu sur la surface d'usinage (112) au moyen d'au moins une optique de représentation (152).

5. Procédé selon l'une des revendications précédentes, le dispositif de mise en forme de rayon (132) comportant au moins un modulateur de lumière spatial (136) et/ou au moins un système de micromiroirs.

6. Procédé selon l'une des revendications précédentes, le procédé comprenant une séquence d'au moins deux étapes d'éclairage différentes, la surface d'usinage (112) de la pièce ouvrée (110) étant éclairée avec des profils de rayon (116, 118, 120) différents du rayon laser (130) dans les différentes étapes d'éclairage.

7. Procédé selon la revendication précédente, une matrice (138) d'éléments de modification (140) du dispositif de mise en forme de rayon (132) étant respectivement excitée de manière différente dans les différentes étapes d'éclairage.

8. Procédé selon l'une des deux revendications précédentes, des trous de géométrie différente et/ou de profondeur différente étant ménagés dans la pièce ouvrée (110) respectivement dans des plans différents de la pièce ouvrée (110) dans les différentes étapes d'éclairage.

9. Arrangement d'usinage au laser (126) destiné à usiner une pièce ouvrée (110) avec un rayonnement laser, l'arrangement d'usinage au laser (126) possédant un arrangement d'ablation au laser destiné à l'ablation d'un matériau, l'arrangement d'usinage au laser (126) possédant au moins une source de lumière laser (128) destinée à fournir au moins un rayon laser (130), l'arrangement d'usinage au laser (126) étant conçu de telle sorte que le rayon laser (130) vient frapper au moins une surface d'usinage (112) de la pièce ouvrée (110), l'arrangement d'usinage au laser (126) possédant en outre au moins un dispositif de mise en forme de rayon (132) destiné à influencer le rayon laser (130), le dispositif de mise en forme de rayon (132) étant conçu pour imprimer au rayon laser (130), à l'endroit de la surface d'usinage (112), au moins un profil de rayon (116, 118, 120) réglable prédéfini, l'arrangement d'usinage au laser (126) possédant une commande (148) et étant conçu pour générer au moins deux modèles différents de zones éclairées et non éclairées (122, 124) sur la surface d'usinage (112), **caractérisé en ce que** le rayonnement laser se compose d'impulsions laser ayant des durées d'impulsion maximales de 100 picosecondes, lors d'un changement entre deux modèles différents, une fluence dans les zones éclairées (122) restant identique et étant choisie de telle sorte qu'il peut se produire un enlèvement sans fusion du matériau.

10. Arrangement d'usinage au laser (126) selon la revendication précédente, la commande (148) étant conçue pour exécuter une séquence d'au moins deux étapes d'éclairage différentes, la surface d'usinage (112) de la pièce ouvrée (110) étant éclairée avec des profils de rayon (116, 118, 120) différents du rayon laser (130) dans les différentes étapes d'éclairage.

11. Arrangement d'usinage au laser (126) selon l'une des revendications précédentes concernant un arrangement d'usinage au laser (126), l'arrangement d'usinage au laser (126) possédant au moins un élément de maintien destiné à accueillir la pièce ouvrée (110).
